# EUROPEAN PATENT APPLICATION

(11) **EP 1 113 468 A2**
(43) Date of publication of application: **04.07.2001**
(21) Application number: 00128169.0
(22) Date of filing: 21.12.2000
(51) Int. Cl.: H01G 9/058

(54) **Activated carbon for electric double-layer capacitor**

(30) Priority: 28.12.1999 JP 37304799
(71) Applicant: HONDA GIKEN KOGYO KABUSHIKI KAISHA, Minato-ku Tokyo (JP)
(72) Inventor: Endoh, Morinobu, Suzaka-shi, Nagano (JP); Noguchi, Minoru, c/o K.K. Honda Gijutsu Kenkyusho, Wako-shi, Saitama (JP); Oki, Naohiko, c/o K.K. Honda Gijutsu Kenkyusho, Wako-shi, Saitama (JP); Oyama, Shigeki, c/o K.K. Honda Gijutsu Kenkyusho, Wako-shi, Saitama (JP)
(74) Representative: Böhm, Brigitte, Dipl.-Chem. Dr.

(57) **Abstract**

Activated carbon for electric double-layer capacitor has a high electrostatic capacity density. An area rate of edge faces in a surface (including inner surfaces of fine bores) of the activated carbon for an electric double-layer capacitor is equal to or higher than 20%.

## Description

### BACKGROUND OF THE INVENTION

### FIELD OF THE INVENTION

The present invention relates to activated carbon for an electric double-layer capacitor.

### DESCRIPTION OF THE PRIOR ART

It is a conventional practice to use activated carbon having a specific surface area as a measure for enhancing the electrostatic capacity of an electric double-layer capacitor.

However, the following problem is encountered: The electrostatic capacity density of the activated carbon is not increased in proportion to an increase in specific surface area and approximately 80 F/cc is the maximum value at a specific surface area that is equal to or larger than 2,000 m²/g. Thus, it is impossible to sufficiently meet the demand for an increase in electrostatic capacity of the electric double-layer capacitor.

### SUMMARY OF THE INVENTION

It is an object of the present invention to provide activated carbon of the above-described type, wherein not only is the specific surface area increased but also the electrostatic capacity density is increased by specifying the crystal faces for the surface (including inner surfaces of fine bores) and the area rate of the crystal faces.

To achieve the above object, according to the present invention, there is provided activated carbon for an electric double-layer capacitor, wherein an area rate of edge faces in a surface (including inner surfaces of fine bores) is equal to or higher than 20%.

The activated carbon of the above-described configuration has a high electrostatic capacity density exceeding 80 F/cc, e.g., equal to or higher than 100 F/cc, in spite of a specific surface area equal to or smaller than 1,500 m²/g. However, if the area rate of the edge faces is lower than 20%, the electrostatic capacity density is as low as in the prior art.

### BRIEF DESCRIPTION OF THE DRAWINGS

Fig.1 is a broken-away front elevational view of an essential portion of a button-type electric double-layer capacitor.

Fig.2 is a molecular model diagrammatical view showing the crystal structure of graphite.

Fig.3 is a diagrammatical view of the crystal structure of easy-graphitizable carbon.

Fig.4 is a diagrammatical view of the crystal structure of non-graphitizable carbon.

Fig.5 is a graph showing the relationship between the area rate A of edge faces and the electrostatic capacity density Cd.

Fig.6 is a graph showing the relationship between the specific surface area S and the electrostatic capacity density Cd.

### DETAILED DESCRIPTION OF THE EMBODIMENT OF THE INVENTION

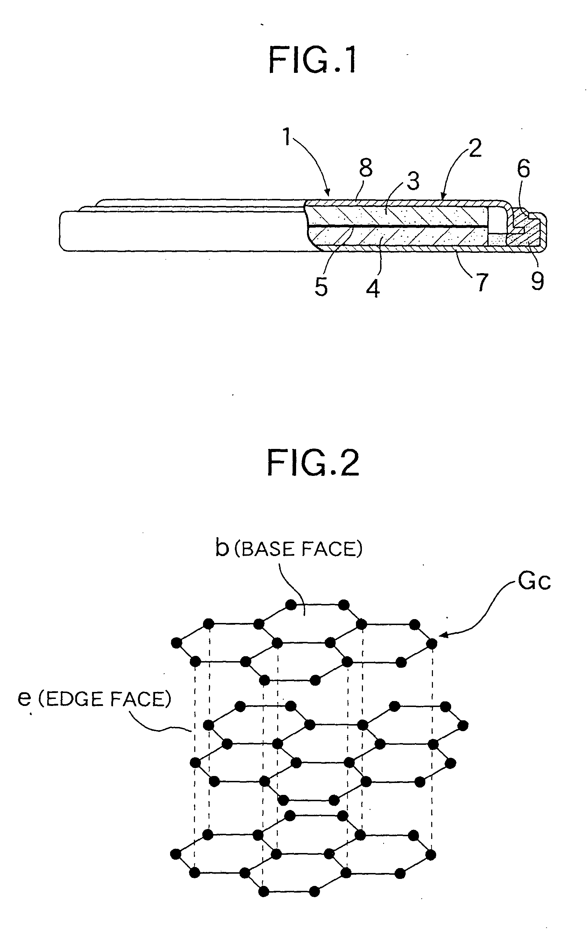

Referring to Fig.1, a button-type electric double-layer capacitor 1 includes a case 2, a pair of polarizing electrodes 3 and 4 accommodated in the case 2, a spacer 5 interposed between the polarizing electrodes 3 and 4, and an electrolyte filled in the case 2. The case 2 includes a body 7 made of aluminum (Al) having an opening 6, and a lid plate 8 made of aluminum (Al) and closing the opening 6. A seal material 9 is filled for sealing between an outer periphery of the lid plate 8 and an inner periphery of the body 7. Each of the electrodes 3 and 4 is formed of a mixture comprising activated carbon, a conductive filler and a binder.

Referring to Fig.2, a crystal structure Gc is graphite and is a layer lattice structure including base faces b which are laminated one on another and each of which is a hexagonal net plane. A face forming layer of the later lattice structure is an edge face e. The base face b is low in electrostatic capacity, as compared with the edge face e, because the entrance of ions is obstructed by a shielding effect of an electron cloud formed by electrons. For example, the electrostatic capacity Cb of the base face b is 4.6 µF/cm², and the electrostatic capacity Ce of the edge face e is 20 µF/cm².

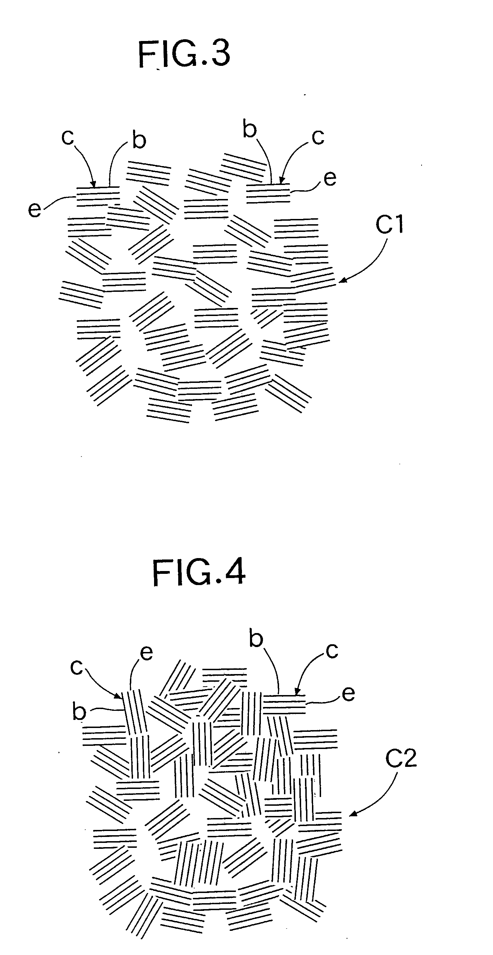

A carbonized powder, which is formed by carbonization and which is an intermediate, is a carbon material produced by the advancement of graphitization to the certain extent. The carbon material is classified into two types: easy-graphitizable carbon C1 shown in Fig.3, and non-graphitizable carbon C2 shown in Fig.4. The easy-graphitizable carbon C1 is an aggregate of crystallites c each having a crystal structure substantially similar to that of graphite, namely, a crystal structure having base faces b and edge faces e, the base faces b being oriented. On the other hand, the non-graphitizable carbon C2 is an aggregate of crystallites c which are similar to the above-described crystallites, but the base faces b are not oriented.

In the embodiment, even if the activated carbon is formed of any of the carbons C1 and C2, when the surface of the activated carbon after being activated comprises a plurality of base faces b formed of a plurality of crystallites c, and a plurality of edge faces e, an area rate A of the edge faces e in the surface is set at a value of A ≥ 20%. In this case, a specific surface area S of the activated carbon is equal to or smaller than 500 m²/g. In the embodiment, the entire surface may be formed of edge faces e, namely, the specific surface area S may be equal to 100%, in some cases.

Such activated carbon has a high electrostatic capacity density exceeding 80 F/cc, e.g., equal to or higher than 100 F/cc, in spite of its small specific surface area.

To ensure the area rate A and the specific surface area S as described above, the following activating treatment of the carbonized powder is carried out: When the carbonized powder is formed of the easy-graphitizable carbon, an alkali activating treatment is generally carried out in view of the non-activatability of the easy-graphitizable carbon to achieve a slow formation of pores. On the other hand, when the carbonized powder is formed of the non-graphitizable carbon, a water-vapor activating treatment is generally carried out in view of the easy activatability of the easy-graphitizable carbon to achieve a rapid formation of pores.

Particular samples will be described below.

### Example I

A phenolic resin is dissolved in ethanol and then, 5% by weight of aluminum acetyl acetonate complex is mixed with the resulting solution. Thereafter, the mixture is subjected to a drying treatment to provide a granular material. The granular material is subjected to a carbonizing treatment at 600°C for 2 hours in a nitrogen gas atmosphere to provide a carbonized powder. The carbonized powder is subjected to a pulverizing treatment, whereby the particle size of the powder is regulated. The carbonized powder is formed of non-graphitizable carbon. The carbonized powder is subjected to a water-vapor activating treatment at 950°C for 5 minutes to produce activated carbon. This activated carbon is called sample 1.

### Example II

Activated carbon is produced in substantially the same manner as in Example I, except that the temperature in the carbonizing treatment in Example I is changed to 650°C. This activated carbon is called sample 2. In this case, the carbonized powder is formed of non-graphitizable carbon.

### Example III

A granular meso-phase pitch is subjected to an insolubilizing treatment at 320°C for 30 minutes in an open-air atmosphere. Then, the treated powder is subjected to a carbonizing treatment at 650°C for one hour in a nitrogen gas atmosphere to provide a carbonized powder. The carbonized powder is pulverized, whereby the particle size of the powder is regulated. The resulting carbonized powder is formed of non-graphitizable carbon. The carbonized powder is subjected to a water-vapor activating treatment at 950°C for 5 minutes to produce activated carbon. This activated carbon is called sample 3.

### Example IV

A granular meso-phase pitch is subjected to an insolubilizing treatment at 320° C for 30 minutes in an open-air atmosphere. Then, the treated powder is subjected to a carbonizing treatment at 700°C for one hour in a nitrogen gas atmosphere to provide a carbonized powder. The carbonized powder is pulverized, whereby the particle size of the powder is regulated. The resulting carbonized powder is formed of easy-graphitizable carbon. The carbonized powder and an amount of KOH twice the weight of carbon are mixed together, and the resulting mixture is subjected to an alkali activating treatment (a potassium activating treatment) at 800°C for 5 hours to produce activated carbon. This activated carbon is called sample 4.

### Example V

A powdery resin of vinyl chloride is subjected to a carbonizing treatment at 650°C for one hour in a nitrogen gas atmosphere to provide a carbonized powder. The carbonized powder is pulverized, whereby the particle size of the powder is regulated. The resulting carbonized powder is formed of easy-graphitizable carbon. The carbonized powder and an amount of KOH, twice the weight of carbon, are mixed together, and the resulting mixture is subjected to an alkali activating treatment (a potassium activating treatment) at 800°C for 5 hours to produce activated carbon. This activated carbon is called sample 5.

The weight, the volume, the density and the specific surface area of each of the samples 1 to 5 are measured. A BET process is used for the measurement of the specific surface area. Polarizing electrodes 3 and 4 as shown in Fig.1 are produced using each of the samples 1 to 5. The polarizing electrodes 3 and 4 are incorporated into the case 2 to assemble the button-type electric double-layer capacitor 1. An actual electrostatic capacity of each of the capacitors 1 is measured.

Four types of commercially available activated carbons are selected. Actual electrostatic capacities of the activated carbons and the button-type electric double-layer capacitors made using such activated carbons are measured in the same manner. Among these activated carbons, each of comparative samples 1 and 2 is a water-vapor activated carbon, and each of comparative samples 3 and 4 is alkali activated carbon.

Table 1 shows the results of measurement for the samples 1 to 5 and the comparative samples 1 to 4.

**Table 1**

| | Weight (g) | Volume (cc) | Density (g/cc) | Specific surface area (m³/g) | Actual electrostatic capacity (F) |
|---|---|---|---|---|---|
| Sample 1 | 0.503 | 0.628 | 0.800 | 1200.0 | 62.8 |
| Sample 2 | 0.563 | 0.628 | 0.896 | 1100.0 | 70.4 |
| Sample 3 | 0.460 | 0.628 | 0.732 | 1200.0 | 75.4 |
| Sample 4 | 0.507 | 0.628 | 0.807 | 800.0 | 81.7 |
| Sample 5 | 0.554 | 0.628 | 0.881 | 700.0 | 93.0 |
| Comparative Sample 1 | 0.375 | 0.628 | 0.597 | 2000.0 | 50.3 |
| Comparative Sample 2 | 0.341 | 0.628 | 0.543 | 2100.0 | 51.5 |
| Comparative Sample 3 | 0.314 | 0.628 | 0.500 | 2500.0 | 50.3 |
| Comparative Sample 4 | 0.209 | 0.628 | 0.333 | 3500.0 | 37.7 |

An electrostatic capacity Cw (F/g) per unit weight, an electrostatic capacity per unit volume, namely, and electrostatic capacity density Cd (F/cc) and an electrostatic capacity Ca (µF/cm²) per unit area for sample 1 and the other samples were determined, thereby providing the results shown in Table 2. The electrostatic capacity Ca (µF/cm²) per unit area is determined according to an equation, Ca = Cw/S, using the electrostatic capacity Cw (F/g) per unit weight and the specific surface area S.

**Table 2**

| | Electrostatic capacity | | |
|---|---|---|---|
| | Cw (F/g) | Cd (F/cc) | Ca (µF/cm²) |
| Sample 1 | 125.0 | 100.0 | 10.4 |
| Sample 2 | 125.0 | 112.0 | 11.4 |
| Sample 3 | 164.0 | 120.0 | 13.7 |
| Sample 4 | 161.0 | 130.0 | 20.1 |
| Sample 5 | 168.0 | 148.0 | 24.0 |
| Comparative Sample 1 | 134.0 | 80.0 | 6.7 |
| Comparative Sample 2 | 151.0 | 82.0 | 7.2 |
| Comparative Sample 3 | 160.0 | 80.0 | 6.4 |
| Comparative Sample 4 | 180.0 | 60.0 | 5.1 |

If the area rate of the edge faces e in the surface is represented by A; the electrostatic capacity Cb of the base face b is defined as being 4.6 µF/cm² as described above; and the electrostatic capacity Ce of the edge face e is defined as being 20 µF/cm² as described above, the electrostatic capacity Ca in unit area is represented by Ca = {20A + 4.6(100 - A)}/100. Therefore, the area rate A of the edge faces e is represented by A = 100 (Ca - 4.6)/15.4 (%).

The area rate A of the edge faces e in the surface for the sample 1 and the other samples is determined by using the equation for the area rate A, thereby providing the results shown in Table 3.

**Table 3**

| | Electrostatic capacity Ca (µF/cm²) | Area rate A of edge faces (%) |
|---|---|---|
| Sample 1 | 10.4 | 37.7 |
| Sample 2 | 11.4 | 44.2 |
| Sample 3 | 13.7 | 59.1 |
| Sample 4 | 20.1 | 100.6 |
| Sample 5 | 24.0 | 126.0 |
| Comparative Sample 1 | 6.7 | 13.6 |
| Comparative Sample 2 | 7.2 | 16.9 |
| Comparative Sample 3 | 6.4 | 11.7 |
| Comparative Sample 4 | 5.1 | 3.2 |

The reason why the area rate A of the edge faces e in the samples 4 and 5 exceeds 100% in Table 3 is as follows: In measuring the specific surface area by the BET process, a nitrogen gas is adsorbed into the surface of activated carbon, namely, the outer surfaces and inner surfaces of the fine bores. Hence, the nitrogen gas could not enter bores smaller than the nitrogen molecule having a less than diameter 17 Å. For this reason, the surface area of the smaller bores as described above is not included in the measured value. But, such bores contribute to an enhancement in electrostatic capacity and A > 100 % is attributable to this.

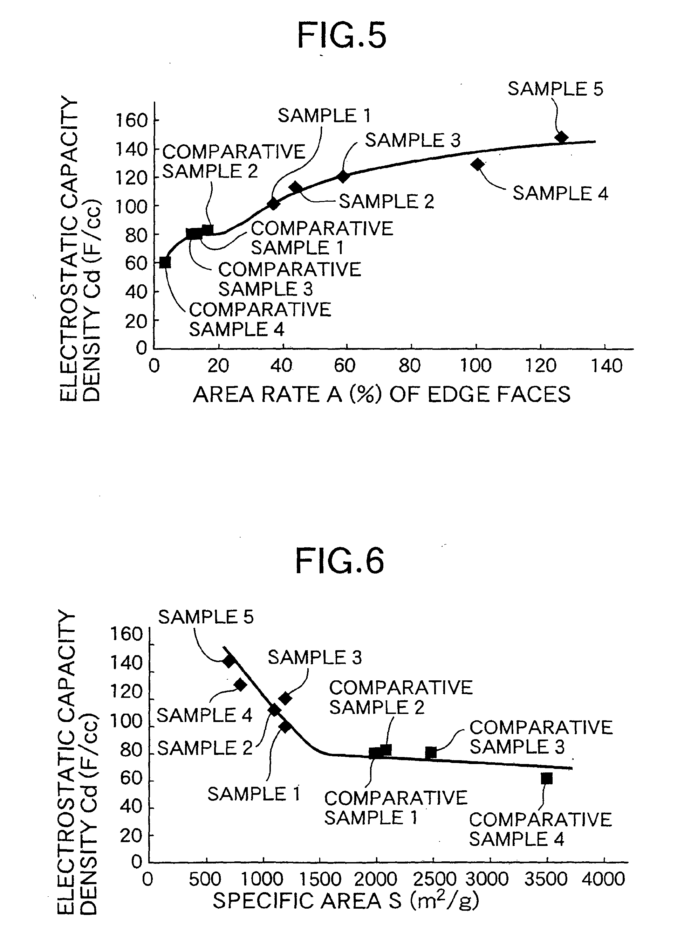

Fig. 5 is a graph based on Tables 2 and 3 that show the relationship between the area rate A of the edge faces e and the electrostatic capacity density Cd for the sample 1 and the other samples. It can be seen from Fig.5 that a rise in electrostatic capacity density Cd appears when the area rate A of the edge faces e is equal to or higher than 20% i.e., A ≥ 20%.

Fig. 6 is a graph based on Tables 1 and 2 that show the relationship between the specific surface area S and the electrostatic capacity density Cd for sample 1 and the other samples. It can be seen from Fig.6 that the electrostatic capacity density Cd is higher when the specific surface area S is equal to or smaller than 1,500 m²/g, i.e., S ≤ 1,500 m²/g. Namely, even if the specific surface area S is set at a value smaller than that in the prior art, the electrostatic capacity density Cd of the activated carbon can be increased by setting the area rate A of the edge faces e in the surface at a value of A ≥ 20 %.

According to the present invention, it is possible to provide the activated carbon for the electric double-layer capacitor having the high electrostatic capacity density by the above-described configuration.

Activated carbon for electric double-layer capacitor has a high electrostatic capacity density. An area rate of edge faces in a surface (including inner surfaces of fine bores) of the activated carbon for an electric double-layer capacitor is equal to or higher than 20%.

## Claims

1. Activated carbon for an electric double-layer capacitor, wherein an area rate A of edge faces (e) in a surface including inner surfaces of fine bores is equal to or higher than 20%.

2. An activated carbon for an electric double-layer capacitor, comprising: an activated carbon material having a crystal structure with base faces laminated to one another to form edge faces wherein an area rate of the edge faces is at least equal to or greater than 20%.

3. An activated carbon according to claim 2, wherein the activated carbon material has an electrostatic capacity density exceeding 80 F/cc while having a specific surface area equal to or less than 1,500 m²/g.

4. An activated carbon according to claim 2, wherein the activated carbon material is graphitizable carbon.

5. An activate carbon according to claim 2, wherein the activated carbon material is formed from a carbonized powder being classified as one of easy-graphitizable carbon and non-graphitizable carbon.
